# EUROPEAN PATENT SPECIFICATION

(11) **EP 3 678 340 B1**
(45) Date of publication and mention of the grant of the patent: **01.01.2025**
(21) Application number: 18872008.0
(22) Date of filing: 12.09.2018
(51) Int. Cl.: H04L 41/0663, H04L 41/08, H04L 43/0811, H04L 41/342, H04L 41/40, H04L 43/20

(54) **SOFTWARE-DEFINED NETWORK SETTING METHOD, CONTROLLER, SWITCH, AND STORAGE MEDIUM**
VERFAHREN ZUR SOFTWARE-DEFINIERTEN NETZWERKEINSTELLUNG, STEUERGERÄT, SCHALTER UND SPEICHERMEDIUM
PROCÉDÉ DE CONFIGURATION DE RÉSEAU SDN, DISPOSITIF DE COMMANDE, COMMUTATEUR ET SUPPORT D'INFORMATIONS

(30) Priority: 31.10.2017 CN 201711049534
(43) Date of publication of application: 08.07.2020
(73) Proprietor: ZTE Corporation, Shenzhen, Guangdong 518057 (CN)
(72) Inventor: ZHANG, Ming, Shenzhen Guangdong 518057 (CN)
(74) Representative: Boult Wade Tennant LLP
(86) International application number: PCT/CN2018/105309
(87) International publication number: WO 2019/085651

(56) References cited:
- EP-A1- 2 813 034
- WO-A1-2017/080582
- CN-A- 104 243 240
- CN-A- 104 426 789
- CN-A- 104 468 168
- CN-A- 104 468 360
- CN-A- 104 852 867
- CN-A- 106 790 411
- MARK REITBLATT ET AL: "Abstractions for network update", APPLICATIONS, TECHNOLOGIES, ARCHITECTURES, AND PROTOCOLS FOR COMPUTER COMMUNICATION, ACM, 2 PENN PLAZA, SUITE 701 NEW YORK NY 10121-0701 USA, 13 August 2012 (2012-08-13), pages 323 - 334, XP058008044, ISBN: 978-1-4503-1419-0, DOI: 10.1145/2342356.2342427
- WEN XITAO ET AL: "RuleTris: Minimizing Rule Update Latency for TCAM-Based SDN Switches", PROCEEDINGS OF THE INTERNATIONAL CONFERENCE ON DISTRIBUTED COMPUTING SYSTEMS, IEEE COMPUTER SOCIETY, US, 27 June 2016 (2016-06-27), pages 179 - 188, XP032939887, ISSN: 1063-6927, [retrieved on 20160808], DOI: 10.1109/ICDCS.2016.41
- "OPENFLOW SWITCH SPECIFICATION VERSION 1.3. 1", OPENFLOW SWITCH SPECIFICATION VERSION 1.3. 1 - (WIRE PROTOCOL 0X04), OPEN FLOW NETWORKING FOUDATION, US, vol. ONF TS-007, 6 September 2012 (2012-09-06), pages 1 - 128, XP008176971

## Description

### TECHNICAL FIELD

The present disclosure relates generally to, but is not limited to, the field of communication technologies, and in particular, to a software defined network (SDN) setting method, a controller, a switch, and a storage medium

### BACKGROUND

An SDN is a novel network system structure, and separates a control plane of a network from a data forwarding plane of the network. In the SDN network, a controller (or a controller cluster) is responsible for collecting information, such as a topology and traffic, of a whole network, calculating a traffic forwarding path, and delivering a forwarding table entry to a switch by using the OpenFlow protocol, to allow the switch to forward data according to the forwarding table entry.

In the related art, when a control plane and a forwarding plane are interrupted (for example, a controller cluster is restarted and/or an intermittent disconnection occurs on a switch in a large-scale network), this results in a reconnection operation between a controller and an OpenFlow switch. To ensure consistency of forwarding table entries on the controller and the OpenFlow switch after a reconnection, when the OpenFlow switch accesses the SDN network, the controller first controls the OpenFlow switch to eliminate all forwarding table entries, and then delivers forwarding table entries again. This results in a short interruption of data forwarding traffic of the OpenFlow switch during the reconnection between the controller and the OpenFlow switch. Especially, when a scale of the network is larger, re-delivery of forwarding table entries consumes a longer time, and a traffic interruption of data forwarding caused by an interruption time significantly affects data forwarding of the SDN.

EP2813034 A1 discloses a connection of a forwarding element to a new master controller after loss of a previous master controller, and/or distribution of forwarding element loads across a plurality of peer controllers.

SIGCOMM conference publication "Abstractions for network update", Mark Reitblatt et al. introduces a notion of consistent network updates that are guaranteed to preserve well-defined behaviors when transitioning between configurations.

### SUMMARY

The present invention relates to a software defined network setting method applied to a controller, a software defined network setting method applied to a switch, a controller, a switch, and a storage medium, as defined in the annexed claims.

Based on the above, the present invention is intended to overcome a disadvantage of a data forwarding interruption of a switch caused by an interruption between a controller and the switch in an SDN in the related art.

The present invention provides an SDN setting method. The method is applied to a controller, according to independent claim 1.

In an embodiment, sending the setting message carrying the update time to the switch after it is detected that the connection to the switch is interrupted, and the connection reestablishment request from the switch is received includes:
when it is detected that the connection to the switch is interrupted, and the connection reestablishment request from the switch is received, determining whether a forwarding capacity maintaining message from the switch is received; and
when the forwarding capacity maintaining message from the switch is received, sending the setting message to the switch.

The present invention further provides an SDN setting method. The method is applied to a switch, according to independent claim 3.

In an embodiment, after the connection reestablishment request is sent to the controller, the method further includes:
sending a forwarding capacity maintaining message to the controller, to allow the controller to send the setting message carrying the update time to the switch based on the forwarding capacity maintaining message.

In an embodiment, the first forwarding table entry includes a first group table, and the second forwarding table entry includes a second group table; and
updating, based on the update time, the second forwarding table entry according to the received first forwarding table entry from the controller includes:
within the update time starting from reception of the setting message, deleting all group tables in the second group table, and storing all group tables in the first group table into the second group table.

The present invention further provides a controller, including a processor and a memory, according to independent claim 6.

In an embodiment, sending the setting message carrying the update time to the switch when it is detected that the connection to the switch is interrupted, and the connection reestablishment request from the switch is received includes:
when it is detected that the connection to the switch is interrupted, and the connection reestablishment request from the switch is received, determining whether a forwarding capacity maintaining message from the switch is received; and
when the forwarding capacity maintaining message from the switch is received, sending the setting message to the switch.

The present invention further provides a switch, including a processor and a memory, according to independent claim 8.

In an embodiment, after the connection reestablishment request is sent to the controller, the one or more programs are further executed by the one or more processors, to implement the following step:
sending a forwarding capacity maintaining message to the controller, to allow the controller to send the setting message carrying the update time to the switch based on the forwarding capacity maintaining message.

In an embodiment, the first forwarding table entry includes a first flow table and a first metering rate-limiting table, and the second forwarding table entry includes a second flow table and a second metering rate-limiting table; and
updating, based on the update time, the second forwarding table entry according to the received first forwarding table entry from the controller includes:
within the update time starting from reception of the setting message, updating the second flow table by using the first flow table, and updating the second metering rate-limiting table by using the first metering rate-limiting table; and
when the update time expires, deleting a flow table that is not updated in the second flow table and a metering rate-limiting table that is not updated in the second metering rate-limiting table.

In an embodiment, the first forwarding table entry includes a first group table, and the second forwarding table entry includes a second group table; and
updating, based on the update time, the second forwarding table entry according to the received first forwarding table entry from the controller includes:
within the update time starting from reception of the setting message, deleting all group
tables in the second group table, and storing all group tables in the first group table into the second group table.

The present disclosure further provides a storage medium, storing one or more programs, where the one or more programs are executable by one or more processors, to implement steps of the foregoing SDN setting method.

By using the foregoing technical solutions, the present disclosure include at least the following advantages:
By applying the SDN setting method, the controller, the switch, and the storage medium provided by the embodiments of the present disclosure, forwarding, by the switch based on a pre-stored forwarding table entry, data in a case of a disconnection between the controller and the switch in an SDN network is implemented, thereby preventing the disconnection between the controller and the switch from causing the switch to stop data forwarding, thereby effectively improving forwarding efficiency of the switch in the SDN network, and reducing a failure rate of the SDN network.

### BRIEF DESCRIPTION OF THE DRAWINGS

Fig. 1 is a schematic structural diagram of composition of an SDN network in the related art;
Fig. 2 is a flowchart of an SDN setting method according to an embodiment of the present disclosure;
Fig. 3 is a flowchart of an SDN setting method according to an embodiment of the present disclosure;
Fig. 4 is a flowchart of an SDN setting method according to an embodiment of the present disclosure;
Fig. 5 is a flowchart of an SDN setting method according to an embodiment of the present disclosure;
Fig. 6 is a flowchart of a method for updating a flow table by a switch according to an embodiment of the present disclosure;
Fig. 7 is a schematic structural diagram of composition of a controller according to an embodiment of the present disclosure; and
Fig. 8 is a schematic structural diagram of composition of a switch according to an embodiment of the present disclosure.

### DETAILED DESCRIPTION

The following further describes the present disclosure in detail with reference to the accompanying drawings and the embodiments. It should be understood that the specific embodiments described herein are merely used to explain the present disclosure, and are not intended to limit the present disclosure.

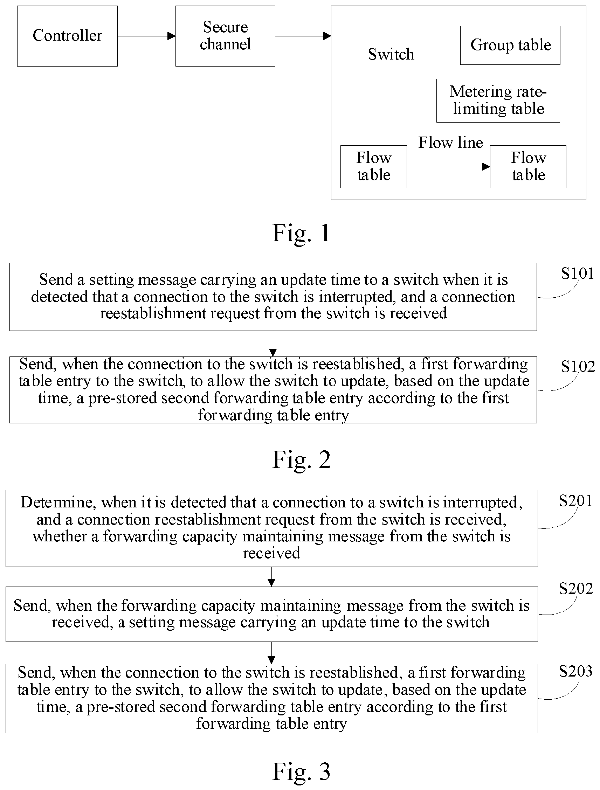

An SDN network includes a switch and a controller (or a controller cluster) supporting the OpenFlow protocol. As shown in Fig. 1, the switch and the controller establish a connection, through a secure channel, based on the OpenFlow protocol, and by using flow tables, metering rate-limiting tables, and group tables, datagrams received by the switch are matched and forwarded. The switch determines forwarding of data, based on forwarding table entries (including: multi-level flow tables, metering rate-limiting tables, and group tables) delivered by the controller.

An embodiment of the present disclosure provides an SDN setting method. The method is applied to a controller, and as shown in Fig.2, includes the following steps.

In step S101, a setting message carrying an update time is sent to a switch when it is detected that a connection to the switch is interrupted, and a connection reestablishment request from the switch is received.

In this embodiment, the reasons leading to the interruption of connection between the controller and the switch include at least one of the following: a failure of the controller, restarting of the controller, and a situation, such as an intermittent disconnection of a switch in a large-scale SDN.

In this embodiment, the update time is not specifically limited. The update time may be an optimum update time of a second entry that is set according to engineering experience, or may be an optimum update time of a second entry that is obtained according to a limited quantity of experiments, or may be an optimum update time of a second entry that is obtained according to a limited quantity of computer simulations.

In step S102, when the connection to the switch is reestablished, a first forwarding table entry is sent to the switch, to allow the switch to update, based on the update time, a pre-stored second forwarding table entry according to the first forwarding table entry.

By sending a first forwarding table entry to the switch, to allow the switch to update, based on the update time, a pre-stored second forwarding table entry according to the first forwarding table entry when the connection to the switch is reestablished, forwarding table entries in the switch that reestablishes the connection to the controller after the connection to the controller is interrupted can be updated effectively and quickly, thereby greatly improving data forwarding accuracy of the SDN.

The SDN setting method provided by this embodiment of the present disclosure can effectively and quickly update forwarding table entries in the switch that reestablishes the connection to the controller after the connection to the controller is interrupted, and greatly improve data forwarding accuracy of the SDN.

An embodiment of the present disclosure provides an SDN setting method. The method is applied to a controller, and as shown in Fig. 3, includes the following steps.

In step S201, when it is detected that a connection to a switch is interrupted, and a connection reestablishment request from the switch is received, it is determined whether a forwarding capacity maintaining message from the switch is received.

In this embodiment, reasons leading to the interruption of connection between the controller and the switch include at least one of the following: a failure of the controller, restarting of the controller, and a situation, such as an intermittent disconnection of a switch in a large-scale SDN.

In step S202, when the forwarding capacity maintaining message from the switch is received, a setting message carrying an update time is sent to the switch.

In this embodiment, the update time is not specifically limited. The update time may be an optimum update time of a second entry that is set according to engineering experience, or may be an optimum update time of a second entry that is obtained according to a limited quantity of experiments, or may be an optimum update time of a second entry that is obtained according to a limited quantity of computer simulations.

In case that the switch can forward data according to the pre-stored second forwarding table entry, the switch sends the forwarding capacity maintaining message to the controller, to inform the controller that the switch can forward data according to the pre-stored second forwarding table entry.

In step S203, when the connection to the switch is reestablished, a first forwarding table entry is sent to the switch, to allow the switch to update, based on the update time, a pre-stored second forwarding table entry according to the first forwarding table entry.

By sending a first forwarding table entry to the switch, to allow the switch to update, based on the update time, a pre-stored second forwarding table entry according to the first forwarding table entry in case that the connection to the switch is reestablished, forwarding table entries in the switch that reestablishes the connection to the controller after the connection to the controller is interrupted can be updated effectively and quickly, thereby greatly improving data forwarding accuracy of the SDN.

The SDN setting method provided by this embodiment of the present disclosure can effectively and quickly update forwarding table entries in the switch that reestablishes the connection to the controller after the connection to the controller is interrupted, and greatly improve data forwarding accuracy of the SDN.

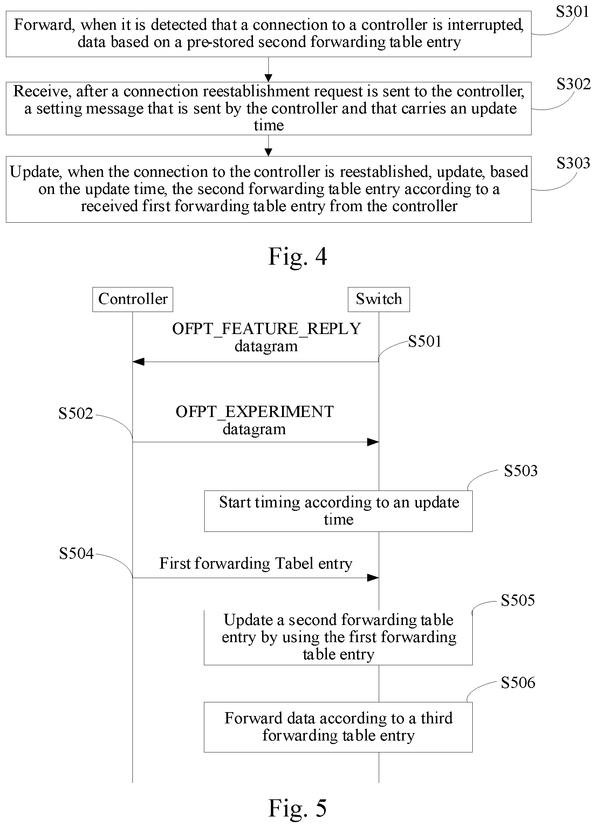

An embodiment of the present disclosure provides an SDN setting method. The method is applied to a switch, and as shown in Fig. 4, includes:
In step S301, when it is detected that a connection to a controller is interrupted, forward data based on a pre-stored second forwarding table entry.

In this embodiment, reasons leading to the interruption of connection between the controller and the switch include at least one of the following: a failure of the controller, restarting of the controller, and a situation, such as an intermittent disconnection of a switch in a large-scale SDN.

The pre-stored second forwarding table entry is the second forwarding table entry sent by the controller to the switch before the connection between the switch and the controller is interrupted.

The data forwarding, by the switch based on the pre-stored second forwarding table entry, prevents the disconnection between the controller and the switch from causing the switch to stop data forwarding, thereby effectively improving forwarding efficiency of the switch in the SDN network, and reducing a failure rate of the SDN network.

In step S302, after a connection reestablishment request is sent to the controller, a setting message is received. Herein, the setting message is sent by the controller and carries an update time.

In step S303, when the connection to the controller is reestablished, based on the update time, the second forwarding table entry is updated according to a received first forwarding table entry from the controller.

In an embodiment, step S303 includes:
within the update time starting from reception of the setting message, updating the second forwarding table entry by using the first forwarding table entry; and
when the update time expires, deleting a forwarding table entry that is not updated in the second forwarding table entry.

The updating, by the switch, based on the update time, a pre-stored second forwarding table entry according to the first forwarding table entry can effectively and quickly update forwarding table entries in the switch that reestablishes the connection to the controller after the connection to the controller is interrupted, and greatly improve data forwarding accuracy of the SDN.

The SDN setting method provided by this embodiment of the present disclosure implements data forwarding, by the switch based on a pre-stored forwarding table entry, in a case of a disconnection between a controller and a switch in an SDN network, thereby preventing the disconnection between the controller and the switch from causing the switch to stop data forwarding, thereby effectively improving forwarding efficiency of the switch in the SDN network, and reducing a failure rate of the SDN network. Forwarding table entries in the switch that reestablishes the connection to the controller after the connection to the controller is interrupted can be effectively and quickly updated, thereby greatly improving data forwarding accuracy of the SDN.

An embodiment of the present disclosure provides an SDN setting method, where the method is applied to a switch, and as shown in Fig. 4, includes:
In step S301, when it is detected that a connection to a controller is interrupted, data is forwarded based on a pre-stored second forwarding table entry.

In this embodiment, reasons leading to the interruption of connection between the controller and the switch include at least one of the following: a failure of the controller, restarting of the controller, and a situation, such as an intermittent disconnection of a switch, in a large-scale SDN.

The pre-stored second forwarding table entry is the second forwarding table entry sent by the controller to the switch before the connection between the switch and the controller is interrupted.

The data forwarding, by the switch based on the pre-stored second forwarding table entry, prevents the disconnection between the controller and the switch from causing the switch to stop data forwarding, thereby effectively improving forwarding efficiency of the switch in the SDN network, and reducing a failure rate of the SDN network.

In step S302, after a connection reestablishment request is sent to the controller, a setting message is received. Herein, the setting message is sent by the controller and carries an update time.

In an embodiment, step S302 includes:
after the connection reestablishment request is sent to the controller, sending a forwarding capacity maintaining message to the controller, to allow the controller to send the setting message carrying the update time to the switch based on the forwarding capacity maintaining message; and
receiving a setting message that is sent by the controller and that carries an update time.

When the switch can forward data according to the pre-stored second forwarding table entry, the switch sends the forwarding capacity maintaining message to the controller, to inform the controller that the switch can forward data according to the pre-stored second forwarding table entry.

In step S303, when the connection to the controller is reestablished, based on the update time, the second forwarding table entry is updated according to a received first forwarding table entry from the controller.

The first forwarding table entry includes a first flow table and a first metering rate-limiting table, and the second forwarding table entry includes a second flow table and a second metering rate-limiting table.

Step S303 includes:
within the update time starting from reception of the setting message, updating the second flow table by using the first flow table, and updating the second metering rate-limiting table by using the first metering rate-limiting table; and
when the update time expires, deleting a flow table that is not updated in the second flow table and a metering rate-limiting table that is not updated in the second metering rate-limiting table.

In an embodiment, the first forwarding table entry includes a first group table, and the second forwarding table entry includes a second group table.

Step S303 includes:
within the update time starting from reception of the setting message, deleting all group tables in the second group table, and storing all group tables in the first group table into the second group table.

In an embodiment, the first forwarding table entry includes a first flow table, a first metering rate-limiting table, and a first group table, and the second forwarding table entry includes a second flow table, a second metering rate-limiting table, and a second group table

Step S303 includes:
within the update time starting from reception of the setting message, updating the second flow table by using the first flow table, and updating the second metering rate-limiting table by using the first metering rate-limiting table; and deleting all group tables in the second group table, and storing all group tables in the first group table into the second group table; and
when the update time expires, deleting a flow table that is not updated in the second flow table and a metering rate-limiting table that is not updated in the second metering rate-limiting table.

The updating, by the switch based on the update time, a pre-stored second forwarding table entry according to the first forwarding table entry, can effectively and quickly update forwarding table entries in the switch that reestablishes the connection to the controller after the connection to the controller is interrupted, and greatly improve data forwarding accuracy of the SDN.

The SDN setting method provided by this embodiment of the present disclosure implements data forwarding, by the switch based on a pre-stored forwarding table entry, in a case of a disconnection between a controller and a switch in an SDN network, thereby preventing the disconnection between the controller and the switch from causing the switch to stop data forwarding, thereby effectively improving forwarding efficiency of the switch in the SDN network, and reducing a failure rate of the SDN network. Forwarding table entries in the switch that reestablishes the connection to the controller after the connection to the controller is interrupted can be effectively and quickly updated, thereby greatly improving data forwarding accuracy of the SDN.

Using the SDN setting method as an example, an application instance is described with reference to Fig. 5 to Fig. 6.

In step S501, a switch sends an OFPT_FEATURE_REPLY datagram to a controller.

When it is detected that a connection of the switch to the controller is interrupted, the switch initiates a connection reestablishment request to the controller. The switch forwards data based on a pre-stored second forwarding table entry. The switch sends the OFPT_FEATURE_REPLY datagram carrying a forwarding capacity maintaining message to the controller.

A setting manner of the OFPT FEATURE REPLY datagram carrying the forwarding capacity maintaining message includes, but is not limited to:
setting a most significant bit in a capacity field in the OFPT_FEATURE_REPLY datagram to 1.

In this embodiment, reasons leading to the interruption of connection between the controller and the switch include at least one of the following:
the controller encounters a severe failure, and needs to be recovered by restarting an SDN network cluster; and when a large quantity of switches exist in a large-scale SDN network, a situation, such as an interruption of an OpenFlow connection between the switch and the controller, is caused by an unstable management network.

In step S502, the controller sends the OFPT_EXPERIMENT datagram to the switch.

When the controller receives the forwarding capacity maintaining message carried in the OFPT FEATURE REPLY datagram, the controller is prohibited from sending a deletion instruction of the second forwarding table entry to the switch; and the controller sends the OFPT_EXPERIMENT datagram carrying an update time to the switch.

A manner of detecting, by the controller, whether the forwarding capacity maintaining message is carried in the OFPT FEATURE REPLY datagram includes, but is not limited to:
detecting the most significant bit in the capacity field of the OFPT FEATURE REPLY datagram.

If the most significant bit in the capacity field of the OFPT_FEATURE_REPLY datagram is 1, the forwarding capacity maintaining message is carried in the OFPT_FEATURE_REPLY datagram; if the most significant bit in the capacity field of the OFPT_FEATURE_REPLY datagram is 0, the forwarding capacity maintaining message is not carried in the OFPT FEATURE REPLY datagram.

A setting manner of the OFPT_EXPERIMENT datagram carrying the update time includes, but is not limited to:
setting a body field of the OFPT_EXPERIMENT datagram to be the update time.

In this embodiment, the update time is not specifically limited. The update time may be an optimum update time of a second entry that is set according to engineering experience, or may be an optimum update time of a second entry that is obtained according to a limited quantity of experiments, or may be an optimum update time of a second entry that is obtained according to a limited quantity of computer simulations.

In step S503, the switch starts timing according to the update time.

When the switch receives the OFPT_EXPERIMENT datagram that is sent by the controller and that carries the update time, aging tags are set for all second forwarding table entries, and the timing is started according to the update time.

In step S504, the controller sends a first forwarding table entry to the switch.

When the connection between the switch and the controller is reestablished, the controller sends the first forwarding table entry to the switch.

In step S505, the switch updates the second forwarding table entry by using the first forwarding table entry.

The switch receives the first forwarding table entry. Within the update time starting from a beginning of the timing, the switch updates the second forwarding table entry by using the first forwarding table entry, to obtain a third forwarding table entry.

A manner in which the switch updates, within the update time starting from the beginning of the timing, the second forwarding table entry by using the first forwarding table entry includes:
The first forwarding table entry includes a first flow table, a first metering rate-limiting table, and a first group table, and the second forwarding table entry includes a second flow table, a second metering rate-limiting table, and a second group table.

Within the update time starting from reception of the update datagram, the second flow table is updated by using the first flow table, and aging tags of all the second flow tables that have been updated are deleted; and the second metering rate-limiting table is updated by using the first metering rate-limiting table, and aging tags of all the second metering rate-limiting tables have been updated are deleted; and all group tables in the second group table are deleted, and all group tables in the first group table are stored into the second group table.

When the update time expires, a flow table that is not updated in the second flow table is deleted to obtain a fourth flow table; and a metering rate-limiting table that is not updated in the second metering rate-limiting table is deleted, to obtain a fourth metering rate-limiting table.

The third forwarding table entry is obtained, here the third forwarding table entry includes the fourth flow table, the fourth metering rate-limiting table, and the first group table.

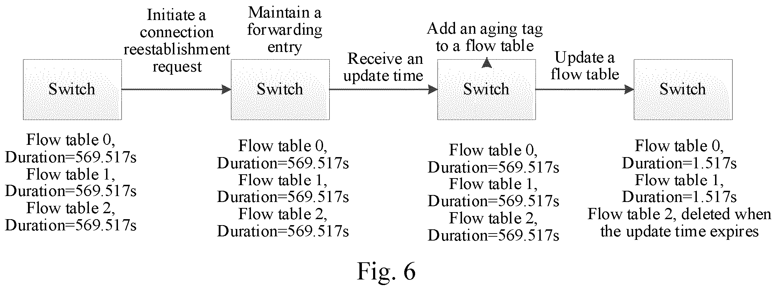

For example, as shown in Fig. 6, the switch forwards data according to a received second flow table from the controller. Here the second flow table includes a flow table 0, where duration = 569.517s, a flow table 1, where duration = 569.517s, and a flow table 2, where duration = 569.517s.

When the switch detects that a connection to the controller is interrupted, the switch initiates a connection reestablishment request to the controller, and the switch maintains forwarding data by using the second flow table, where the second flow table includes a flow table 0, where duration = 569.517s, a flow table 1, where duration = 569.517s, and a flow table 2, where duration = 569.517s.

When receiving the OFPT_EXPERIMENT datagram carrying the update time, the switch adds aging tags to all the second flow tables, and starts timing, wherein, a manner in which the switch adds the aging tags to all the second flow tables includes a flow table 0, where duration = 569.517s, and sflag = true, timer, a flow table 1, where duration = 569.517s, and sflag = true, timer, and a flow table 2, where duration = 569.517s, and sflag = true, timer.

When the connection between the switch and the controller is reestablished, the switch receives the first flow table, where the first flow table includes a flow table 0, where duration = 1.517s; and a flow table 1, where duration = 1.517s. Within the update time starting from the beginning of the timing, the switch updates the second flow table by using the first flow table, where the updated second flow table includes a flow table 0, where duration = 1.517s; and a flow table 1, where duration = 1.517s. A flow table 2 in the second flow table is deleted when the update time expires.

In step S506, the switch forwards data according to the third forwarding table entry.

The SDN setting method provided by this embodiment of the present disclosure implements data forwarding, by the switch based on a pre-stored forwarding table entry, in a case of a disconnection between a controller and a switch in an SDN network, thereby preventing the disconnection between the controller and the switch from causing the switch to stop data forwarding, thereby effectively improving forwarding efficiency of the switch in the SDN network, and reducing a failure rate of the SDN network. Forwarding table entries in the switch that reestablishes the connection to the controller after the connection to the controller is interrupted can be effectively and quickly updated, thereby greatly improving data forwarding accuracy of the SDN.

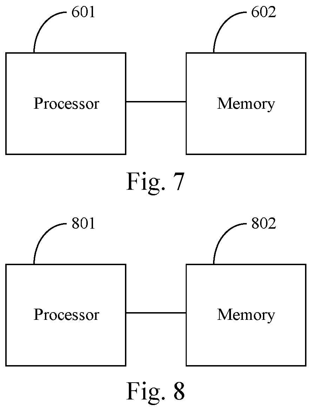

An embodiment of the present disclosure provides a controller. The controller is disposed in an SDN network, and as shown in Fig. 7, includes the following components:
a processor 601 and a memory 602. In some embodiments, the processor 601 and the memory 602 may be connected by a bus or in another manner.

The processor 601 may be a general-purpose processor, for example, a central processing unit (CPU), or may be a digital signal processor (DSP), an application-specific integrated circuit (ASIC), or one or more integrated circuits configured to implement embodiments of the present disclosure. The memory 602 is configured to store an instruction executable by the processor 601.

The memory 602 is configured to store program code and transmit the program code to the processor 601. The memory 602 may include a volatile memory, for example, a random-access memory (RAM). The memory 602 may alternatively include a non-volatile memory, for example, a read-only memory (ROM), a flash memory, a hard disk drive (HDD), or a solid-state drive (SSD). The memory 602 may alternatively include a combination of the foregoing types of memories.

The processor 601 is configured to invoke the program code stored in the memory 602, to perform the following operations.
(1) a setting message carrying an update time is sent to a switch when it is detected that a connection to the switch is interrupted, and a connection reestablishment request from the switch is received.

In this embodiment, reasons leading to the interruption of connection between the controller and the switch include at least one of the following: a failure of the controller, restarting of the controller, and a situation, such as an intermittent disconnection of a switch, in a large-scale SDN.

In this embodiment, the update time is not specifically limited. The update time may be an optimum update time of a second entry that is set according to engineering experience, or may be an optimum update time of a second entry that is obtained according to a limited quantity of experiments, or may be an optimum update time of a second entry that is obtained according to a limited quantity of computer simulations.

(2) When the connection to the switch is reestablished, a first forwarding table entry is sent to the switch, to allow the switch to update, based on the update time, a pre-stored second forwarding table entry according to the first forwarding table entry.

By sending a first forwarding table entry to the switch, to allow the switch to update, based on the update time, a pre-stored second forwarding table entry according to the first forwarding table entry in case that the connection to the switch is reestablished, forwarding table entries in the switch that reestablishes the connection to the controller after the connection to the controller is interrupted can be updated effectively and quickly to make a great improvement on data forwarding accuracy of the SDN.

The controller provided by this embodiment of the present disclosure can effectively and quickly update forwarding table entries in the switch that reestablishes the connection to the controller after the connection to the controller is interrupted, which can greatly improve data forwarding accuracy of the SDN.

An embodiment of the present disclosure provides a controller. The controller is disposed in an SDN network, and as shown in Fig. 7, includes the following components:
a processor 601 and a memory 602. In some embodiments, the processor 601 and the memory 602 may be connected by using a bus or in another manner.

The processor 601 may be a general-purpose processor, for example, a CPU, or may be a DSP or an ASIC, or may be one or more integrated circuits configured to implement this embodiment of the present disclosure. The memory 602 is configured to store an instruction executable by the processor 601.

The memory 602 is configured to store program code and transmit the program code to the processor 601. The memory 602 may include a volatile memory, for example, a RAM. The memory 602 may alternatively include a non-volatile memory, for example, a ROM, a flash memory, an HDD, or an SSD. The memory 602 may alternatively include a combination of the foregoing types of memories.

The processor 601 is configured to invoke the program code stored in the memory 602, to perform the following operations.
(1) When it is detected that a connection to a switch is interrupted, and a connection reestablishment request from the switch is received, it is determined whether a forwarding capacity maintaining message from the switch is received.

In this embodiment, reasons leading to the interruption of connection between the controller and the switch include at least one of the following: a failure of the controller, restarting of the controller, and a situation, such as an intermittent disconnection of a switch, in a large-scale SDN.

(2) When the forwarding capacity maintaining message from the switch is received, a setting message carrying an update time is sent to the switch.

In this embodiment, the update time is not specifically limited. The update time may be an optimum update time of a second entry that is set according to engineering experience, or may be an optimum update time of a second entry that is obtained according to a limited quantity of experiments, or may be an optimum update time of a second entry that is obtained according to a limited quantity of computer simulations.

When the switch can forward data according to the pre-stored second forwarding table entry, the switch sends the forwarding capacity maintaining message to the controller, to inform the controller that the switch can forward data according to the pre-stored second forwarding table entry.

(3) When the connection to the switch is reestablished, a first forwarding table entry is sent to the switch, to allow the switch to update, based on the update time, a pre-stored second forwarding table entry according to the first forwarding table entry.

By sending a first forwarding table entry to the switch, to allow the switch to update, based on the update time, a pre-stored second forwarding table entry according to the first forwarding table entry in case that the connection to the switch is reestablished, forwarding table entries in the switch that reestablishes the connection to the controller after the connection to the controller is interrupted can be updated effectively and quickly, thereby greatly improving data forwarding accuracy of the SDN.

The controller provided by this embodiment of the present disclosure can effectively and quickly update forwarding table entries in the switch that reestablishes the connection to the controller after the connection to the controller is interrupted, which can greatly improve data forwarding accuracy of the SDN.

An embodiment of the present disclosure further provides a switch. The switch is disposed in an SDN network, and as shown in Fig. 8, includes the following components:
a processor 801 and a memory 802. In some embodiments, the processor 801 and the memory 802 may be connected by a bus or in another manner.

The processor 801 may be a general-purpose processor, for example, a CPU, or may be a DSP or an ASIC, or may be one or more integrated circuits configured to implement this embodiment of the present disclosure. The memory 802 is configured to store an instruction executable by the processor 801.

The memory 802 is configured to store program code and transmit the program code to the processor 801. The memory 802 may include a volatile memory, for example, a RAM. The memory 802 may alternatively include a non-volatile memory, for example, a ROM, a flash memory, an HDD, or an SSD. The memory 802 may alternatively include a combination of the foregoing types of memories.

The processor 801 is configured to invoke the program code stored in the memory 802, to perform the following operations.
(1) When it is detected that a connection to a controller is interrupted, data is forwarded based on a pre-stored second forwarding table entry.

In this embodiment, reasons leading to the interruption of connection between the controller and the switch include at least one of the following: a failure of the controller, restarting of the controller, and a situation, such as an intermittent disconnection of a switch, in a large-scale SDN.

The pre-stored second forwarding table entry is the second forwarding table entry sent by the controller to the switch before the connection between the switch and the controller is interrupted.

The data forwarding, by the switch based on the pre-stored second forwarding table entry, prevents the disconnection between the controller and the switch from causing the switch to stop data forwarding, thereby effectively improving forwarding efficiency of the switch in the SDN network, and reducing a failure rate of the SDN network.

(2) After a connection reestablishment request is sent to the controller, receive a setting message is received. Herein, the setting message is sent by the controller and carries an update time.

(3) When the connection to the controller is reestablished, based on the update time, the second forwarding table entry is updated according to a received first forwarding table entry from the controller.

In an embodiment, when the connection to the controller is reestablished, a manner of updating, based on the update time, the second forwarding table entry according to the received first forwarding table entry from the controller includes:
within the update time starting from reception of the setting message, updating the second forwarding table entry by using the first forwarding table entry; and
when the update time expires, deleting a forwarding table entry that is not updated in the second forwarding table entry.

The updating, by the switch based on the update time, a pre-stored second forwarding table entry according to the first forwarding table entry can effectively and quickly update forwarding table entries in the switch that reestablishes the connection to the controller after the connection to the controller is interrupted, and greatly improve data forwarding accuracy of the SDN.

The switch provided by this embodiment of the present disclosure implements data forwarding, based on a pre-stored forwarding table entry, in a case of a disconnection between a controller and a switch in an SDN network, thereby preventing the disconnection between the controller and the switch from causing the switch to stop data forwarding, thereby effectively improving forwarding efficiency of the switch in the SDN network, and reducing a failure rate of the SDN network. Forwarding table entries in the switch that reestablishes the connection to the controller after the connection to the controller is interrupted can be effectively and quickly updated, thereby greatly improving data forwarding accuracy of the SDN.

An embodiment of the present disclosure provides a switch. The switch is disposed in an SDN network, and as shown in Fig. 8, includes the following components:
a processor 801 and a memory 802. In some embodiments of the present disclosure, the processor 801 and the memory 802 may be connected by using a bus or in another manner.

The processor 801 may be a general-purpose processor, for example, a CPU, or may be a DSP or an ASIC, or may be one or more integrated circuits configured to implement this embodiment of the present disclosure. The memory 802 is configured to store an instruction executable by the processor 801.

The memory 802 is configured to store program code and transmit the program code to the processor 801. The memory 802 may include a volatile memory, for example, a RAM. The memory 802 may alternatively include a non-volatile memory, for example, a ROM, a flash memory, an HDD, or an SSD. The memory 802 may alternatively include a combination of the foregoing types of memories.

The processor 801 is configured to invoke the program code stored in the memory 802, to perform the following operations.
(1) When it is detected that a connection to a controller is interrupted, data is forwarded based on a pre-stored second forwarding table entry.

In this embodiment, reasons leading to the interruption of connection between the controller and the switch include at least one of the following: a failure of the controller, restarting of the controller, and a situation, such as an intermittent disconnection of a switch, in a large-scale SDN.

The pre-stored second forwarding table entry is the second forwarding table entry sent by the controller to the switch before the connection between the switch and the controller is interrupted.

The data forwarding, by the switch based on the pre-stored second forwarding table entry, prevents the disconnection between the controller and the switch from causing the switch to stop data forwarding, thereby effectively improving forwarding efficiency of the switch in the SDN network, and reducing a failure rate of the SDN network.

(2) After a connection reestablishment request is sent to the controller, a setting message is received. Herein, the setting message is sent by the controller and carries an update time.

In an embodiment, after the connection reestablishment request is sent to the controller, a manner of receiving a setting message that is sent by the controller and that carries an update time includes:
after the connection reestablishment request is sent to the controller, sending a forwarding capacity maintaining message to the controller, to allow the controller to send the setting message carrying update time to the switch based on the forwarding capacity maintaining message; and
receiving a setting message that is sent by the controller and that carries an update time.

When the switch can forward data according to the pre-stored second forwarding table entry, the switch sends the forwarding capacity maintaining message to the controller, to inform the controller that the switch can forward data according to the pre-stored second forwarding table entry.

(3) When the connection to the controller is reestablished, based on the update time, the second forwarding table entry is updated according to a received first forwarding table entry from the controller.

When the connection to the controller is reestablished, a manner of updating, based on the update time, the second forwarding table entry according to the received first forwarding table entry from the controller includes the following.

The first forwarding table entry includes a first flow table and a first metering rate-limiting table, and the second forwarding table entry includes a second flow table and a second metering rate-limiting table.

Within the update time starting from reception of the setting message, the second flow table is updated by using the first flow table, and the second metering rate-limiting table is updated by using the first metering rate-limiting table.

When the update time expires, a flow table that is not updated in the second flow table and a metering rate-limiting table that is not updated in the second metering rate-limiting table are deleted.

In an embodiment, when the connection to the controller is reestablished, a manner of updating, based on the update time, the second forwarding table entry according to the received first forwarding table entry from the controller includes the following.

The first forwarding table entry includes a first group table, and the second forwarding table entry includes a second group table.

Within the update time starting from reception of the setting message, all group tables in the second group table are deleted, and all group tables in the first group table are stored into the second group table.

In an embodiment, when the connection to the controller is reestablished, a manner of updating, based on the update time, the second forwarding table entry according to the received first forwarding table entry from the controller includes the following.

The first forwarding table entry includes a first flow table, a first metering rate-limiting table, and a first group table, and the second forwarding table entry includes a second flow table, a second metering rate-limiting table, and a second group table.

Within the update time starting from reception of the setting message, the second flow table is updated by using the first flow table, and the second metering rate-limiting table is updated by using the first metering rate-limiting table; and all group tables in the second group table are deleted, and all group tables in the first group table are stored into the second group table.

When the update time expires, a flow table that is not updated in the second flow table and a metering rate-limiting table that is not updated in the second metering rate-limiting table are deleted.

The updating, by the switch based on the update time, a pre-stored second forwarding table entry according to the first forwarding table entry can effectively and quickly update forwarding table entries in the switch that reestablishes the connection to the controller after the connection to the controller is interrupted, and greatly improve data forwarding accuracy of the SDN.

The SDN setting method provided by this embodiment of the present disclosure implements data forwarding, by the switch based on a pre-stored forwarding table entry, in a case of a disconnection between a controller and a switch in an SDN network, thereby preventing the disconnection between the controller and the switch from causing the switch to stop data forwarding, thereby effectively improving forwarding efficiency of the switch in the SDN network, and reducing a failure rate of the SDN network. Forwarding table entries in the switch that reestablishes the connection to the controller after the connection to the controller is interrupted can be effectively and quickly updated, thereby greatly improving data forwarding accuracy of the SDN.

The present disclosure provides a computer-readable storage medium.

The computer-readable storage medium may be a RAM, a flash, a ROM, an EPROM, an EEPROM, a register, a hard disk, a removable hard disk, a CD-ROM, or any other storage medium known in the art.

The computer-readable storage medium stores one or more programs, where the one or more programs are executable by one or more processors, to implement some or all steps in any embodiment of the forgoing embodiments of the present disclosure.

The computer-readable storage medium provided by this embodiment of the present disclosure implements stores one or more programs, where the one or more programs are executable by one or more processors, to implement data forwarding, by the switch based on a pre-stored forwarding table entry, in a case of a disconnection between the controller and the switch in an SDN network, to prevent the disconnection between the controller and the switch from causing the switch to stop data forwarding, thereby effectively improving forwarding efficiency of the switch in the SDN network, and reducing a failure rate of the SDN network. Forwarding table entries in the switch that reestablishes the connection to the controller after the connection to the controller is interrupted can be effectively and quickly updated, thereby greatly improving data forwarding accuracy of the SDN.

It should be noted that the terms "include", "comprise", and any variants thereof in the present disclosure are intended to cover a non-exclusive inclusion. Therefore, a process, a method, an article, or an apparatus that includes a series of elements not only includes such elements, but also includes other elements that are not clearly listed or that are inherent to the process, the method, the article, or the apparatus. Unless otherwise specified, an element limited by "include a/an..." does not exclude other same elements existing in the process, the method, the article, or the apparatus that includes the element.

The sequence numbers of the foregoing embodiments of the present disclosure are merely for description and do not indicate the preference of the embodiments.

Through the descriptions of the foregoing implementations, a person skilled in the art may clearly understand that the methods according to the foregoing embodiments may be implemented by software and a necessary general-purpose hardware platform or certainly, by hardware. However, in most cases, the former is a preferred implementation. Based on such an understanding, the technical solutions of the present disclosure essentially, or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of the present disclosure.

The present invention is solely defined in the appended independent claims to which reference should be made. Advantageous features are set out in the appended dependent claims.

## Claims

1. A software defined network, SDN, setting method, applied to a controller, comprising:
sending (S101) a setting message carrying an update time to a switch after the controller detects that a connection to the switch is interrupted and receives a connection reestablishment request from the switch; and
sending (S102) a first forwarding table entry to the switch, when the connection to the switch is reestablished;
wherein the update time and the first forwarding table entry are configured to allow the switch to update a pre-stored second forwarding table entry in the switch, wherein the first forwarding table entry comprises a first flow table and a first metering rate-limiting table, and the second forwarding table entry comprises a second flow table and a second metering rate-limiting table, and the pre-stored second forwarding table entry is a second forwarding table entry sent by the controller to the switch before the connection between the switch and the controller is interrupted;
wherein allow the switch to update a pre-stored second forwarding table entry in the switch comprises:
updating the second flow table by using the first flow table and the second metering rate-limiting table by using the first metering rate-limiting table, within the update time starting from reception of the setting message; and
deleting a flow table that is not updated in the second flow table and a metering rate-limiting table that is not updated in the second metering rate-limiting table, when the update time expires.

2. The method according to claim 1, wherein sending the setting message carrying the update time to the switch after the controller detects that a connection to the switch is interrupted and receives the connection reestablishment request from the switch comprises:
determining (S201) whether the controller receives a forwarding capacity maintaining message from the switch, after the controller detects that the connection to the switch is interrupted and receives the connection reestablishment request from the switch; and
sending (5202) the setting message to the switch, when the controller receives the forwarding capacity maintaining message from the switch.

3. A software defined network, SDN, setting method, applied to a switch, comprising:
forwarding (S301) data based on a pre-stored second forwarding table entry, when the switch detects that a connection to a controller is interrupted, wherein the pre-stored second forwarding table entry is a second forwarding table entry sent by the controller to the switch before the connection between the switch and the controller is interrupted;
receiving (S302) a setting message that is sent by the controller and that carries an update time, after a connection reestablishment request is sent to the controller; and
when the connection to the controller is reestablished, based on the update time, updating (S303) the second forwarding table entry according to a received first forwarding table entry from the controller, wherein the first forwarding table entry comprises a first flow table and a first metering rate-limiting table, and the second forwarding table entry comprises a second flow table and a second metering rate-limiting table;
wherein updating (S303) the second forwarding table entry according to a received first forwarding table entry from the controller comprises:
updating (S303) the second flow table by using the first flow table and the second metering rate-limiting table by using the first metering rate-limiting table, within the update time starting from reception of the setting message; and
deleting (S303) a flow table that is not updated in the second flow table and a metering rate-limiting table that is not updated in the second metering rate-limiting table, when the update time expires.

4. The method according to claim 3, wherein after sending the connection reestablishment request to the controller, the method further comprises:
sending (S302) a forwarding capacity maintaining message to the controller, to allow the controller to send the setting message carrying the update time to the switch based on the forwarding capacity maintaining message.

5. The method according to claim 3, wherein the first forwarding table entry comprises a first group table, and the second forwarding table entry comprises a second group table; and
updating (S303), based on the update time, the second forwarding table entry according to the received first forwarding table entry from the controller comprises:
deleting (S303) all group tables in the second group table, and storing all group tables of the first group table into the second group table, within the update time starting from reception of the setting message.

6. A controller, comprising a processor (601) and a memory (602), wherein
the processor (601) is configured to execute a software defined network setting program stored in the memory, to implement the following steps:
sending (S101) a setting message carrying an update time to a switch after it is detected that a connection to the switch is interrupted and a connection reestablishment request from the switch is received; and
sending (S102) a first forwarding table entry to the switch, when the connection to the switch is reestablished;
wherein the update time and the first forwarding table entry are configured to allow the switch to update a pre-stored second forwarding table entry in the switch, wherein the first forwarding table entry comprises a first flow table and a first metering rate-limiting table, and the second forwarding table entry comprises a second flow table and a second metering rate-limiting table, and the pre-stored second forwarding table entry is a second forwarding table entry sent by the controller to the switch before the connection between the switch and the controller is interrupted;
wherein allow the switch to update a pre-stored second forwarding table entry in the switch comprises:
updating the second flow table by using the first flow table and the second metering rate-limiting table by using the first metering rate-limiting table, within the update time starting from reception of the setting message; and
deleting a flow table that is not updated in the second flow table and a metering rate-limiting table that is not updated in the second metering rate-limiting table, when the update time expires.

7. The controller according to claim 6, wherein sending (S101) the setting message carrying the update time to the switch after it is detected that the connection to the switch is interrupted and a connection reestablishment request from the switch is received comprises:
determining (S201) whether a forwarding capacity maintaining message from the switch is received, after it is detected that the connection to the switch is interrupted and the connection reestablishment request from the switch is received; and
sending (5202) the setting message to the switch when the forwarding capacity maintaining message from the switch is received.

8. A switch, comprising a processor (801) and a memory (802); wherein the processor (801) is configured to execute a software defined network setting program stored in the memory, to implement the following steps:
forwarding (S301) data based on a pre-stored second forwarding table entry, when it is detected that a connection to a controller is interrupted, wherein the pre-stored second forwarding table entry is a second forwarding table entry sent by the controller to the switch before the connection between the switch and the controller is interrupted;
receiving (S302) a setting message that is sent by the controller and that carries an update time after a connection reestablishment request is sent to the controller; and
updating (S303), based on the update time, the second forwarding table entry according to a received first forwarding table entry from the controller, when the connection to the controller is reestablished, wherein the first forwarding table entry comprises a first flow table and a first metering rate-limiting table, and the second forwarding table entry comprises a second flow table and a second metering rate-limiting table;
wherein updating (S303), based on the update time, the second forwarding table entry according to a received first forwarding table entry from the controller comprises:
updating (S303) the second flow table by using the first flow table and the second metering rate-limiting table by using the first metering rate-limiting table, within the update time starting from reception of the setting message; and
deleting (S303) a flow table that is not updated in the second flow table and a metering rate-limiting table that is not updated in the second metering rate-limiting table, when the update time expires.

9. The switch according to claim 8, wherein after the connection reestablishment request is sent to the controller, the setting program is further executed by the processor, to implement the following step:
sending (S302) a forwarding capacity maintaining message to the controller, to allow the controller to send the setting message carrying the update time to the switch based on the forwarding capacity maintaining message.

10. The switch according to claim 8, wherein the first forwarding table entry comprises a first flow table and a first metering rate-limiting table, and the second forwarding table entry comprises a second flow table and a second metering rate-limiting table; and
updating (S303), based on the update time, the second forwarding table entry according to the received first forwarding table entry from the controller comprises:
updating (S303) the second flow table by using the first flow table, and the second metering rate-limiting table by using the first metering rate-limiting table, within the update time starting from reception of the setting message; and
deleting (S303) a flow table that is not updated in the second flow table and a metering rate-limiting table that is not updated in the second metering rate-limiting table, when the update time expires.

11. The switch according to claim 8 or 10, wherein the first forwarding table entry comprises a first group table, and the second forwarding table entry comprises a second group table; and
updating (S303), based on the update time, the second forwarding table entry according to the received first forwarding table entry sent by the controller comprises:
deleting (S303) all group tables in the second group table, and storing all group tables in the first group table into the second group table, within the update time starting from reception of the setting message.

12. A storage medium, storing at least one program executable by at least one processor, to implement the software defined network, SDN, setting method according to claim 1 or 2, and/or to implement the SDN setting method according to any one of claims 3 to 5.

## Patentansprüche

1. Verfahren zum Einstellen eines softwaredefinierten Netzwerks (SDN), angewandt auf einen Controller, mit den Schritten:
Senden (S101) einer Einstellnachricht, die eine Aktualisierungszeit trägt, an einen Switch, nachdem der Controller erkennt, dass eine Verbindung zum Switch unterbrochen ist, und eine Anforderung zum Wiederherstellen der Verbindung vom Switch empfängt; und
Senden (S102) eines ersten Weiterleitungstabelleneintrags an den Switch, wenn die Verbindung zum Switch wiederhergestellt ist;
wobei die Aktualisierungszeit und der erste Weiterleitungstabelleneintrag konfiguriert sind, um es dem Switch zu ermöglichen, einen vorgespeicherten zweiten Weiterleitungstabelleneintrag im Switch zu aktualisieren, wobei der erste Weiterleitungstabelleneintrag eine erste Durchflusstabelle und eine erste Durchflussratenbegrenzungstabelle umfasst und der der zweite Weiterleitungstabelleneintrag eine zweite Durchflusstabelle und eine zweite Durchflussratenbegrenzungstabelle umfasst und der vorgespeicherte zweite Weiterleitungstabelleneintrag ein vom Controller an den Switch vor der Unterbrechung der Verbindung zwischen dem Switch und dem Controller gesendeter zweiter Weiterleitungstabelleneintrag ist;
wobei das Ermöglichen des Aktualisierens eines vorgespeicherten zweiten Weiterleitungstabelleneintrags im Switch umfasst:
Aktualisieren der zweiten Durchflusstabelle unter Verwendung der ersten Durchflusstabelle und der zweiten Durchflussratenbegrenzungstabelle durch Verwenden der ersten Durchflussratenbegrenzungstabelle in der Aktualisierungszeit, die mit dem Empfang der Einstellnachricht beginnt; und
Löschen einer nicht aktualisierten Durchflusstabelle in der zweiten Durchflusstabelle und einer nicht aktualisierten Durchflussratenbegrenzungstabelle in der zweiten Durchflussratenbegrenzungstabelle, wenn die Aktualisierungszeit abläuft.

2. Verfahren nach Anspruch 1, bei dem das Senden der Einstellnachricht, die die Aktualisierungszeit trägt, an den Switch, nachdem der Controller erkennt, dass eine Verbindung zum Switch unterbrochen ist, und die Anforderung zum Wiederherstellen der Verbindung vom Switch empfängt, umfasst:
Bestimmen (S201), ob der Controller eine Nachricht zum Aufrechterhalten der Weiterleitungskapazität vom Switch empfängt, nachdem der Controller erkennt, dass die Verbindung zum Switch unterbrochen ist, und die Anforderung zum Wiederherstellen der Verbindung vom Switch empfängt; und
Senden (S202) der Einstellnachricht an den Switch, wenn der Controller die Nachricht zum Aufrechterhalten der Weiterleitungskapazität vom Switch empfängt.

3. Verfahren zum Einstellen eines softwaredefinierten Netzwerks (SDN), angewandt auf einen Switch, mit den Schritten:
Weiterleiten (S301) von Daten basierend auf einem vorgespeicherten zweiten Weiterleitungstabelleneintrag, wenn der Switch erkennt, dass eine Verbindung zu einem Controller unterbrochen ist, wobei der vorgespeicherte zweite Weiterleitungstabelleneintrag ein vor der Unterbrechung der Verbindung zwischen dem Switch und dem Controller von dem Controller an den Switch gesendeter zweiter Weiterleitungstabelleneintrag ist;
Empfangen (S302) einer von dem Controller gesendeten Einstellnachricht, die eine Aktualisierungszeit trägt, nachdem eine Anforderung zum Wiederherstellen der Verbindung an den Controller gesendet wurde; und
wenn die Verbindung zu dem Controller wiederhergestellt ist, basierend auf der Aktualisierungszeit, Aktualisieren (S303) des zweiten Weiterleitungstabelleneintrags gemäß einem von dem Controller empfangenen ersten Weiterleitungstabelleneintrag, wobei der erste Weiterleitungstabelleneintrag eine erste Durchflusstabelle und eine erste Durchflussratenbegrenzungstabelle umfasst und der zweite Weiterleitungstabelleneintrag eine zweite Durchflusstabelle und eine zweite Durchflussratenbegrenzungstabelle umfasst;
wobei das Aktualisieren (S303) des zweiten Weiterleitungstabelleneintrags gemäß einem von dem Controller empfangenen ersten Weiterleitungstabelleneintrag umfasst:
Aktualisieren (S303) der zweiten Durchflusstabelle unter Verwendung der ersten Durchflusstabelle und der zweiten Durchflussratenbegrenzungstabelle unter Verwendung der ersten Durchflussratenbegrenzungstabelle in der Aktualisierungszeit, die mit dem Empfang der Einstellnachricht beginnt; und
Löschen (S303) einer nicht aktualisierten Durchflusstabelle in der zweiten Durchflusstabelle und einer nicht aktualisierten Durchflussratenbegrenzungstabelle in der zweiten Durchflussratenbegrenzungstabelle, wenn die Aktualisierungszeit abläuft.

4. Verfahren nach Anspruch 3, bei dem das Verfahren nach dem Senden der Anforderung zum Wiederherstellen der Verbindung an den Controller ferner umfasst:
Senden (S302) einer Nachricht zur Aufrechterhaltung der Weiterleitungskapazität an den Controller, um es dem Controller zu ermöglichen, die Einstellnachricht, die die Aktualisierungszeit trägt, auf der Grundlage der Nachricht zur Aufrechterhaltung der Weiterleitungskapazität an den Switch zu senden.

5. Verfahren nach Anspruch 3, bei dem der erste Weiterleitungstabelleneintrag eine erste Gruppentabelle umfasst und der zweite Weiterleitungstabelleneintrag eine zweite Gruppentabelle umfasst; und
das Aktualisieren (S303) des zweiten Weiterleitungstabelleneintrags basierend auf der Aktualisierungszeit gemäß dem vom Controller empfangenen ersten Weiterleitungstabelleneintrag umfasst:
Löschen (S303) aller Gruppentabellen in der zweiten Gruppentabelle und Speichern aller Gruppentabellen der ersten Gruppentabelle in der zweiten Gruppentabelle in der mit dem Empfang der Einstellnachricht beginnenden Aktualisierungszeit.

6. Controller mit einem Prozessor (601) und einem Speicher (602), wobei der Prozessor (601) konfiguriert ist, ein im Speicher gespeichertes softwaredefiniertes Netzwerkeinstellprogramm auszuführen, um die folgenden Schritte zu implementieren:
Senden (S101) einer Einstellnachricht, die eine Aktualisierungszeit trägt, an einen Switch, nachdem erkannt wurde, dass eine Verbindung zum Switch unterbrochen ist und eine Anforderung zum Wiederherstellen der Verbindung vom Switch empfangen wurde; und
Senden (S102) eines ersten Weiterleitungstabelleneintrags an den Switch, wenn die Verbindung zum Switch wiederhergestellt ist;
wobei die Aktualisierungszeit und der erste Weiterleitungstabelleneintrag konfiguriert sind, um es dem Switch zu ermöglichen, einen vorgespeicherten zweiten Weiterleitungstabelleneintrag im Switch zu aktualisieren, wobei der erste Weiterleitungstabelleneintrag eine erste Durchflusstabelle und eine erste Durchflussratenbegrenzungstabelle umfasst und der der zweite Weiterleitungstabelleneintrag eine zweite Durchflusstabelle und eine zweite Durchflussratenbegrenzungstabelle umfasst und der vorgespeicherte zweite Weiterleitungstabelleneintrag ein vom Controller an den Switch vor der Unterbrechung der Verbindung zwischen dem Switch und dem Controller gesendeter zweiter Weiterleitungstabelleneintrag ist;
wobei das Ermöglichen des Aktualisierens eines vorgespeicherten zweiten Weiterleitungstabelleneintrags im Switch umfasst:
Aktualisieren der zweiten Durchflusstabelle unter Verwendung der ersten Durchflusstabelle und der zweiten Durchflussratenbegrenzungstabelle unter Verwendung der ersten Durchflussratenbegrenzungstabelle in der Aktualisierungszeit, die mit dem Empfang der Einstellungsnachricht beginnt; und
Löschen einer nicht aktualisierten Durchflusstabelle in der zweiten Durchflusstabelle und einer nicht aktualisierten Durchflussratenbegrenzungstabelle in der zweiten Durchflussratenbegrenzungstabelle, wenn die Aktualisierungszeit abläuft.

7. Controller nach Anspruch 6, bei dem das Senden (S101) der Einstellnachricht, die die Aktualisierungszeit trägt, an den Switch, nachdem erkannt wurde, dass die Verbindung zum Switch unterbrochen ist und eine Verbindungswiederherstellungsanforderung vom Switch empfangen wurde, umfasst:
Bestimmen (S201), ob eine Nachricht zur Aufrechterhaltung der Weiterleitungskapazität vom Switch empfangen wird, nachdem erkannt wurde, dass die Verbindung zum Switch unterbrochen ist, und die Anforderung zum Wiederherstellen der Verbindung vom Switch empfangen wurde; und
Senden (S202) der Einstellnachricht an den Switch, wenn die Nachricht zum Aufrechterhalten der Weiterleitungskapazität vom Switch empfangen wird.

8. Switch, umfassend einen Prozessor (801) und einen Speicher (802); wobei der Prozessor (801) konfiguriert ist, um ein in dem Speicher gespeichertes Programm zum Einstellen eines softwaredefinierten Netzwerks auszuführen, um die folgenden Schritte zu implementieren:
Weiterleiten (S301) von Daten basierend auf einem vorgespeicherten zweiten Weiterleitungstabelleneintrag, wenn festgestellt wird, dass eine Verbindung zu einem Controller unterbrochen ist, wobei der vorgespeicherte zweite Weiterleitungstabelleneintrag ein vor der Unterbrechung der Verbindung zwischen dem Switch und dem Controller von dem Controller an den Switch gesendeter zweiter Weiterleitungstabelleneintrag ist;
Empfangen (S302) einer von dem Controller gesendeten Einstellnachricht, die eine Aktualisierungszeit trägt, nachdem eine Anforderung zum Wiederherstellen der Verbindung an den Controller gesendet wurde; und
wenn die Verbindung zu dem Controller wiederhergestellt ist, basierend auf der Aktualisierungszeit, Aktualisieren (S303) des zweiten Weiterleitungstabelleneintrags gemäß einem von dem Controller empfangenen ersten Weiterleitungstabelleneintrag, wobei der erste Weiterleitungstabelleneintrag eine erste Durchflusstabelle und eine erste Durchflussratenbegrenzungstabelle umfasst und der zweite Weiterleitungstabelleneintrag eine zweite Durchflusstabelle und eine zweite Durchflussratenbegrenzungstabelle umfasst;
wobei das Aktualisieren (S303) des zweiten Weiterleitungstabelleneintrags gemäß einem von dem Controller empfangenen ersten Weiterleitungstabelleneintrag auf der Grundlage der Aktualisierungszeit Folgendes umfasst:
Aktualisieren (S303) der zweiten Durchflusstabelle unter Verwendung der ersten Durchflusstabelle und der zweiten Durchflussratenbegrenzungstabelle unter Verwendung der ersten Durchflussratenbegrenzungstabelle in der Aktualisierungszeit, die mit dem Empfang der Einstellnachricht beginnt; und
Löschen (S303) einer nicht aktualisierten Durchflusstabelle in der zweiten Durchflusstabelle und einer nicht aktualisierten Durchflussratenbegrenzungstabelle in der zweiten Durchflussratenbegrenzungstabelle, wenn die Aktualisierungszeit abläuft.

9. Switch nach Anspruch 8, bei dem nach dem Senden der Anforderung zur Wiederherstellung der Verbindung an den Controller das Einstellungsprogramm durch den Prozessor ferner ausgeführt wird, um den folgenden Schritt zu implementieren:
Senden (S302) einer Nachricht zur Aufrechterhaltung der Weiterleitungskapazität an den Controller, um es dem Controller zu ermöglichen, die Einstellnachricht, die die Aktualisierungszeit trägt, auf der Grundlage der Nachricht zur Aufrechterhaltung der Weiterleitungskapazität an den Switch zu senden.

10. Switch nach Anspruch 8, bei dem der erste Weiterleitungstabelleneintrag eine erste Durchflusstabelle und eine erste Durchflussratenbegrenzungstabelle umfasst und der zweite Weiterleitungstabelleneintrag eine zweite Durchflusstabelle und eine zweite Durchflussratenbegrenzungstabelle umfasst; und
das Aktualisieren (S303) des zweiten Weiterleitungstabelleneintrags auf der Grundlage der Aktualisierungszeit gemäß dem vom Controller empfangenen ersten Weiterleitungstabelleneintrag umfasst:
Aktualisieren (S303) der zweiten Durchflusstabelle unter Verwendung der ersten Durchflusstabelle und der zweiten Durchflussratenbegrenzungstabelle unter Verwendung der ersten Durchflussratenbegrenzungstabelle in der Aktualisierungszeit, die mit dem Empfang der Einstellnachricht beginnt; und
Löschen (S303) einer nicht aktualisierten Durchflusstabelle in der zweiten Durchflusstabelle und einer nicht aktualisierten Durchflussratenbegrenzungstabelle in der zweiten Durchflussratenbegrenzungstabelle, wenn die Aktualisierungszeit abläuft.

11. Switch nach Anspruch 8 oder 10, bei dem der erste Weiterleitungstabelleneintrag eine erste Gruppentabelle umfasst und der zweite Weiterleitungstabelleneintrag eine zweite Gruppentabelle umfasst; und
das Aktualisieren (S303) des zweiten Weiterleitungstabelleneintrags auf der Grundlage der Aktualisierungszeit, wobei der zweite Weiterleitungstabelleneintrag gemäß dem von dem Controller gesendeten empfangenen ersten Weiterleitungstabelleneintrag umfasst:
Löschen (S303) aller Gruppentabellen in der zweiten Gruppentabelle und
Speichern aller Gruppentabellen in der ersten Gruppentabelle in der zweiten Gruppentabelle in der Aktualisierungszeit, die mit dem Empfang der Einstellungsnachricht beginnt.

12. Speichermedium, das mindestens ein Programm speichert, das von mindestens einem Prozessor ausführbar ist, um das Verfahren zum Einstellen des softwaredefinierten Netzwerks SDN nach Anspruch 1 oder 2 und/oder das Verfahren zum Einstellen des SDN nach einem der Ansprüche 3 bis 5 zu implementieren.

## Revendications

1. Procédé de configuration de réseau défini par logiciel, SDN, appliqué à un dispositif de commande, comprenant :
l'envoi (S101) d'un message de configuration portant un temps de mise à jour à un commutateur après que le dispositif de commande détecte qu'une connexion avec le commutateur est interrompue et reçoit une demande de rétablissement de connexion à partir du commutateur ; et
l'envoi (S102) d'une première entrée de table de transfert au commutateur, quand la connexion avec le commutateur est rétablie ;
dans lequel le temps de mise à jour et la première entrée de table de transfert sont configurés pour permettre au commutateur de mettre à jour une deuxième entrée de table de transfert prémémorisée dans le commutateur, dans lequel la première entrée de table de transfert comprend une première table de flux et une première table de limitation de débit de mesure, et la deuxième entrée de table de transfert comprend une deuxième table de flux et une deuxième table de limitation de débit de mesure, et la deuxième entrée de table de transfert prémémorisée est une deuxième entrée de table de transfert envoyée par le dispositif de commande au commutateur avant que la connexion entre le commutateur et le dispositif de commande soit interrompue ;
dans lequel une autorisation du commutateur à mettre à jour une deuxième entrée de table de transfert prémémorisée dans le commutateur comprend :
la mise à jour de la deuxième table de flux en utilisant la première table de flux et la deuxième table de limitation de débit de mesure en utilisant la première table de limitation de débit de mesure, dans le temps de mise à jour à partir d'une réception du message de configuration ; et
la suppression d'une table de flux qui n'est pas mise à jour dans la deuxième table de flux et d'une table de limitation de débit de mesure qui n'est pas mise à jour dans la deuxième table de limitation de débit de mesure, quand le temps de mise à jour expire.

2. Procédé selon la revendication 1, dans lequel l'envoi du message de configuration portant le temps de mise à jour au commutateur après que le dispositif de commande détecte qu'une connexion au commutateur est interrompue et reçoit la demande de rétablissement de connexion à partir du commutateur comprend :
la détermination (S201) si le dispositif de commande reçoit un message de maintien de capacité de transfert à partir du commutateur, après que le dispositif de commande détecte que la connexion avec le commutateur est interrompue et reçoit la demande de rétablissement de connexion à partir du commutateur ; et
l'envoi (S202) du message de configuration au commutateur, quand le dispositif de commande reçoit le message de maintien de capacité de transfert à partir du commutateur.

3. Procédé de configuration de réseau défini par logiciel, SDN, appliqué à un commutateur, comprenant :
le transfert (S301) de données sur la base d'une deuxième entrée de table de transfert prémémorisée, quand le commutateur détecte qu'une connexion avec un dispositif de commande est interrompue, dans lequel la deuxième entrée de table de transfert prémémorisée est une deuxième entrée de table de transfert envoyée par le dispositif de commande au commutateur avant que la connexion entre le commutateur et le dispositif de commande soit interrompue ;
la réception (S302) d'un message de configuration qui est envoyé par le dispositif de commande et qui porte un temps de mise à jour, après qu'une demande de rétablissement de connexion est envoyée au dispositif de commande ; et
quand la connexion avec le dispositif de commande est rétablie, sur la base du temps de mise à jour, la mise à jour (S303) de la deuxième entrée de table de transfert en fonction d'une première entrée de table de transfert reçue à partir du dispositif de commande, dans lequel la première entrée de table de transfert comprend une première table de flux et une première table de limitation de débit de mesure, et la deuxième entrée de table de transfert comprend une deuxième table de flux et une deuxième table de limitation de débit de mesure ;
dans lequel la mise à jour (S303) de la deuxième entrée de table de transfert en fonction d'une première entrée de table de transfert reçue à partir du dispositif de commande comprend :
la mise à jour (S303) de la deuxième table de flux en utilisant la première table de flux et la deuxième table de limitation de débit de mesure en utilisant la première table de limitation de débit de mesure, dans le temps de mise à jour à partir d'une réception du message de configuration ; et
la suppression (S303) d'une table de flux qui n'est pas mise à jour dans la deuxième table de flux et d'une table de limitation de débit de mesure qui n'est pas mise à jour dans la deuxième table de limitation de débit de mesure, quand le temps de mise à jour expire.

4. Procédé selon la revendication 3, dans lequel, après l'envoi de la demande de rétablissement de connexion au dispositif de commande, le procédé comprend en outre :
l'envoi (S302) d'un message de maintien de capacité de transfert au dispositif de commande, pour autoriser le dispositif de commande à envoyer le message de configuration portant le temps de mise à jour au commutateur sur la base du message de maintien de capacité de transfert.

5. Procédé selon la revendication 3, dans lequel la première entrée de table de transfert comprend une première table de groupe et la deuxième entrée de table de transfert comprend une deuxième table de groupe ; et
la mise à jour (S303), sur la base du temps de mise à jour, de la deuxième entrée de table de transfert en fonction de la première entrée de table de transfert reçue à partir du dispositif de commande comprend :
la suppression (S303) de toutes les tables de groupe dans la deuxième table de groupe, et la mémorisation de toutes les tables de groupe de la première table de groupe dans la deuxième table de groupe, dans le temps de mise à jour à partir d'une réception du message de configuration.

6. Dispositif de commande, comprenant un processeur (601) et une mémoire (602), dans lequel
le processeur (601) est configuré pour exécuter un programme de configuration de réseau défini par logiciel stocké dans la mémoire, pour mettre en oeuvre les étapes suivantes :
l'envoi (S101) d'un message de configuration portant un temps de mise à jour à un commutateur après qu'il est détecté qu'une connexion avec le commutateur est interrompue et qu'une demande de rétablissement de connexion à partir du commutateur est reçue ; et
l'envoi (S102) d'une première entrée de table de transfert au commutateur, quand la connexion avec le commutateur est rétablie ;
dans lequel le temps de mise à jour et la première entrée de table de transfert sont configurés pour permettre au commutateur de mettre à jour une deuxième entrée de table de transfert prémémorisée dans le commutateur, dans lequel la première entrée de table de transfert comprend une première table de flux et une première table de limitation de débit de mesure, et la deuxième entrée de table de transfert comprend une deuxième table de flux et une deuxième table de limitation de débit de mesure, et la deuxième entrée de table de transfert prémémorisée est une deuxième entrée de table de transfert envoyée par le dispositif de commande au commutateur avant que la connexion entre le commutateur et le dispositif de commande soit interrompue ;
dans lequel une autorisation du commutateur à mettre à jour une deuxième entrée de table de transfert prémémorisée dans le commutateur comprend :
la mise à jour de la deuxième table de flux en utilisant la première table de flux et la deuxième table de limitation de débit de mesure en utilisant la première table de limitation de débit de mesure, dans le temps de mise à jour à partir d'une réception du message de configuration ; et
la suppression d'une table de flux qui n'est pas mise à jour dans la deuxième table de flux et d'une table de limitation de débit de mesure qui n'est pas mise à jour dans la deuxième table de limitation de débit de mesure, quand le temps de mise à jour expire.

7. Dispositif de commande selon la revendication 6, dans lequel l'envoi (S101) du message de configuration portant le temps de mise à jour au commutateur après qu'il est détecté que la connexion avec le commutateur est interrompue et qu'une demande de rétablissement de connexion à partir du commutateur est reçue comprend :
la détermination (S201) si un message de maintien de capacité de transfert à partir du commutateur est reçu, après qu'il est détecté que la connexion avec le commutateur est interrompue et la demande de rétablissement de connexion à partir du commutateur est reçue ; et
l'envoi (S202) du message de configuration au commutateur, quand le message de maintien de capacité de transfert à partir du commutateur est reçu.

8. Commutateur, comprenant un processeur (801) et une mémoire (802) ; dans lequel le processeur (801) est configuré pour exécuter un programme de configuration de réseau défini par logiciel stocké dans la mémoire, pour mettre en oeuvre les étapes suivantes :
le transfert (S301) de données sur la base d'une deuxième entrée de table de transfert prémémorisée, quand le commutateur détecte qu'une connexion avec un dispositif de commande est interrompue, dans lequel la deuxième entrée de table de transfert prémémorisée est une deuxième entrée de table de transfert envoyée par le dispositif de commande au commutateur avant que la connexion entre le commutateur et le dispositif de commande soit interrompue ;
la réception (S302) d'un message de configuration qui est envoyé par le dispositif de commande et qui porte un temps de mise à jour, après qu'une demande de rétablissement de connexion est envoyée au dispositif de commande ; et
la mise à jour (S303), sur la base du temps de mise à jour, de la deuxième entrée de table de transfert en fonction d'une première entrée de table de transfert reçue à partir du dispositif de commande, quand la connexion avec le dispositif de commande est rétablie, dans lequel la première entrée de table de transfert comprend une première table de flux et une première table de limitation de débit de mesure, et la deuxième entrée de table de transfert comprend une deuxième table de flux et une deuxième table de limitation de débit de mesure ;
dans lequel la mise à jour (S303) , sur la base du temps de mise à jour, de la deuxième entrée de table de transfert en fonction d'une première entrée de table de transfert reçue à partir du dispositif de commande comprend :
la mise à jour (S303) de la deuxième table de flux en utilisant la première table de flux et la deuxième table de limitation de débit de mesure en utilisant la première table de limitation de débit de mesure, dans le temps de mise à jour à partir d'une réception du message de configuration ; et
la suppression (S303) d'une table de flux qui n'est pas mise à jour dans la deuxième table de flux et d'une table de limitation de débit de mesure qui n'est pas mise à jour dans la deuxième table de limitation de débit de mesure, quand le temps de mise à jour expire.

9. Commutateur selon la revendication 8, dans lequel, après l'envoi de la demande de rétablissement de connexion au dispositif de commande, le programme de configuration est exécuté en outre par le processeur pour mettre en oeuvre l'étape suivante :
l'envoi (S302) d'un message de maintien de capacité de transfert au dispositif de commande, pour autoriser le dispositif de commande à envoyer le message de configuration portant le temps de mise à jour au commutateur sur la base du message de maintien de capacité de transfert.

10. Commutateur selon la revendication 8, dans lequel la première entrée de table de transfert comprend une première table de flux et une première table de limitation de débit de mesure, et la deuxième entrée de table de transfert comprend une deuxième table de flux et une deuxième table de limitation de débit de mesure ; et
la mise à jour (S303), sur la base du temps de mise à jour, de la deuxième entrée de table de transfert en fonction de la première entrée de table de transfert reçue à partir du dispositif de commande comprend :
la mise à jour (S303) de la deuxième table de flux en utilisant la première table de flux et de la deuxième table de limitation de débit de mesure en utilisant la première table de limitation de débit de mesure, dans le temps de mise à jour à partir d'une réception du message de configuration ; et
la suppression (S303) d'une table de flux qui n'est pas mise à jour dans la deuxième table de flux et d'une table de limitation de débit de mesure qui n'est pas mise à jour dans la deuxième table de limitation de débit de mesure, quand le temps de mise à jour expire.

11. Commutateur selon la revendication 8 ou 10, dans lequel la première entrée de table de transfert comprend une première table de groupe et la deuxième entrée de table de transfert comprend une deuxième table de groupe ; et
la mise à jour (S303), sur la base du temps de mise à jour, de la deuxième entrée de table de transfert en fonction de la première entrée de table de transfert envoyée par le dispositif de commande comprend :
la suppression (S303) de toutes les tables de groupe dans la deuxième table de groupe, et la mémorisation de toutes les tables de groupe de la première table de groupe dans la deuxième table de groupe, dans le temps de mise à jour à partir d'une réception du message de configuration.

12. Support de stockage, stockant au moins un programme exécutable par au moins un processeur, pour mettre en oeuvre le procédé de configuration de réseau défini par logiciel, SDN, selon la revendication 1 ou 2, et/ou mettre en oeuvre le procédé de configuration de SDN selon l'une quelconque des revendications 3 à 5.
